# EUROPEAN PATENT APPLICATION

(11) **EP 4 005 985 A1**
(43) Date of publication of application: **01.06.2022**
(21) Application number: 21206458.8
(22) Date of filing: 04.11.2021
(51) Int. Cl.: C03B 5/235, F23D 14/22, F27D 99/00

(54) **OXYGEN FUEL BURNER FOR A FOREHEARTH SYSTEM**

(30) Priority: 17.11.2020 US 202016950502
(71) Applicant: Honeywell International Inc., Charlotte, NC 28202 (US)
(72) Inventor: WEAVER, Joshua Jacob, Charlotte, 28202 (US); TAYLOR, Curtis Lynn, Charlotte, 28202 (US)
(74) Representative: Houghton, Mark Phillip

(57) **Abstract**

A forehearth system includes a superstructure including refractory bricks that frame a molten glass tank, with a burner block including a discharge throat that extends its distal end formed from a refractory material that is within the superstructure above the molten glass tank. At least one oxygen fuel forehearth burner is within the burner block including a burner body, a fuel pipe within the burner body having a fuel inlet for receiving fuel and a fuel outlet, and an oxygen pipe within the burner body having an oxygen inlet for receiving oxygen and an oxygen outlet. The oxygen pipe is positioned coaxially outside the fuel pipe. The fuel outlet extends beyond the oxygen pipe and beyond the burner body so that the oxygen first reaching the fuel and thus a flame when operating is delayed until the discharge throat.

## Description

### FIELD

Disclosed aspects relate to oxygen fuel burners for a forehearth system of a glass manufacturing system.

### BACKGROUND

A glass manufacturing system is used in the production of glass, where molten glass is produced in a glass melting furnace which then passes along a forehearth system (or forehearth section) in a continuous stream to a feeder bowl from which the molten glass is fed in mold charges or gobs into a glass forming apparatus. The glass forming apparatus processes the molten glass received into a desired form or shape.

The forehearth system is designed to condition the molten glass during conveyance between the glass melting furnace and the glass forming apparatus, rendering the molten glass more suitable for forming or shaping. In particular, the forehearth system is designed to heat or cool the molten glass to the temperature required for processing by the glass forming apparatus. For some glass products, the temperature of the molten glass after processing by the forehearth system needs to be maintained within about 1° C of a target temperature, such as around 1200° C, at the inlet to the glass forming apparatus.

Conventional forehearth systems provide temperature control through a series of relatively small sized oxygen fuel forehearth burners placed longitudinally on either side of the forehearth duct. The spacing between the respective oxygen fuel forehearth burners is typically between six and eighteen inches. A single forehearth system can contain several hundred oxygen fuel forehearth burners and a single glass furnace may have one or multiple forehearth systems. A typical forehearth system comprises a refractory material (e.g., Alumina Zircon Silica) trough along which the molten glass flows, and which is generally provided with a thermally insulating crown or roof.

### SUMMARY

This Summary is provided to introduce a brief selection of disclosed aspects in a simplified form that are further described below in the Detailed Description including the drawings provided. This Summary is not intended to limit the claimed subject matter's scope.

Disclosed aspects recognize the forehearth system of a glass manufacturing system is in several ways more challenging to design for oxygen fuel forehearth burners as compared to designing a glass melting furnace. These design challenges include proper cooling of the oxygen fuel forehearth burner, and efficient and effective management of the discharge velocities of the fuel and the oxygen.

One disclosed aspect comprises a forehearth system comprising a superstructure including a plurality of refractory bricks that frame a molten glass tank. A burner block comprising a refractory material includes a discharge throat that extends to its distal end, where the burner block is within the superstructure above the molten glass tank. At least one oxygen fuel forehearth burner is within the burner block having a long axis along a length direction. A fuel pipe is within the burner body having a fuel inlet for receiving fuel on one end and a fuel outlet on an opposite end. An oxygen pipe is within the burner body having an oxygen inlet for receiving oxygen and an oxygen outlet. The oxygen pipe is positioned coaxially outside the fuel pipe. The fuel outlet extends beyond the oxygen pipe and the burner body so that the oxygen first reaching the fuel and thus a flame when operating is delayed until the discharge throat.

### BRIEF DESCRIPTION OF THE DRAWINGS

FIG. 1 shows a cross-sectional view of an example of an oxygen fuel forehearth burner for a forehearth system of a glass manufacturing system, according to an example aspect. The oxygen fuel forehearth burner is designed to burn a fuel with oxygen to produce a flame of controlled length to supply heat in a controlled manner for thermally treating glass.
FIGs. 2A and 2B each show a cross-sectional view of an arrangement showing a typical burner block for a forehearth system. The burner blocks each comprise a refractory material, and each is shown having a single disclosed oxygen fuel forehearth burner positioned therein.
FIG. 3 depicts an example glass manufacturing system that includes a raw material container that provides unprocessed glass to a glass melting furnace, a plurality of disclosed oxygen fuel forehearth burners within a burner block that receives the melted glass output from the glass melting furnace that has a discharge throat, where the discharge throat is coupled to a glass forming apparatus, according to an example aspect.
FIG. 4 depicts components of a working forehearth system which was used to generate oxygen fuel forehearth burner operating data that is described in the Examples section below.
FIG. 5A is a table summarizing comparative oxygen fuel forehearth burner operating results that compare the performance of a disclosed oxygen fuel forehearth burner to what may be considered a current state-of-the-art oxygen fuel forehearth burner.
FIG. 5B is a scanned image showing flames generated by a disclosed oxygen fuel forehearth burner on the right, and what is considered a current state-of-the-art oxygen fuel forehearth burner on the left.

### DETAILED DESCRIPTION

Disclosed aspects are described with reference to the attached figures, wherein like reference numerals are used throughout the figures to designate similar or equivalent elements. The figures are not drawn to scale and they are provided merely to illustrate certain disclosed aspects. Several disclosed aspects are described below with reference to example applications for illustration. It should be understood that numerous specific details, relationships, and methods are set forth to provide a full understanding of the disclosed aspects.

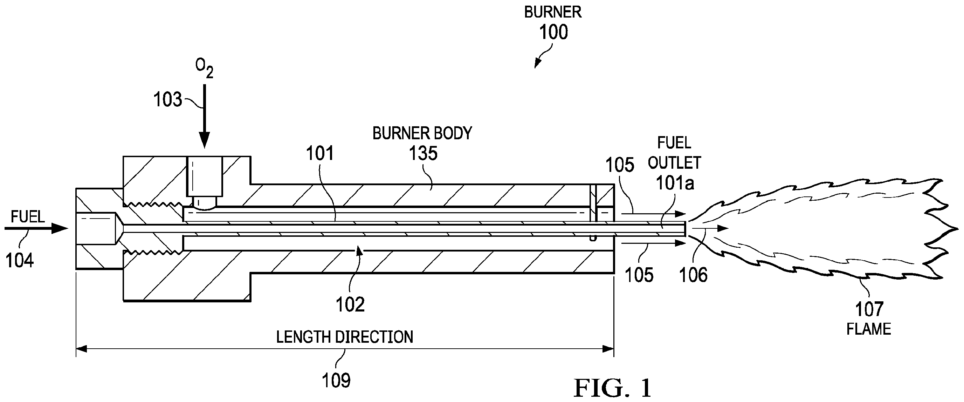

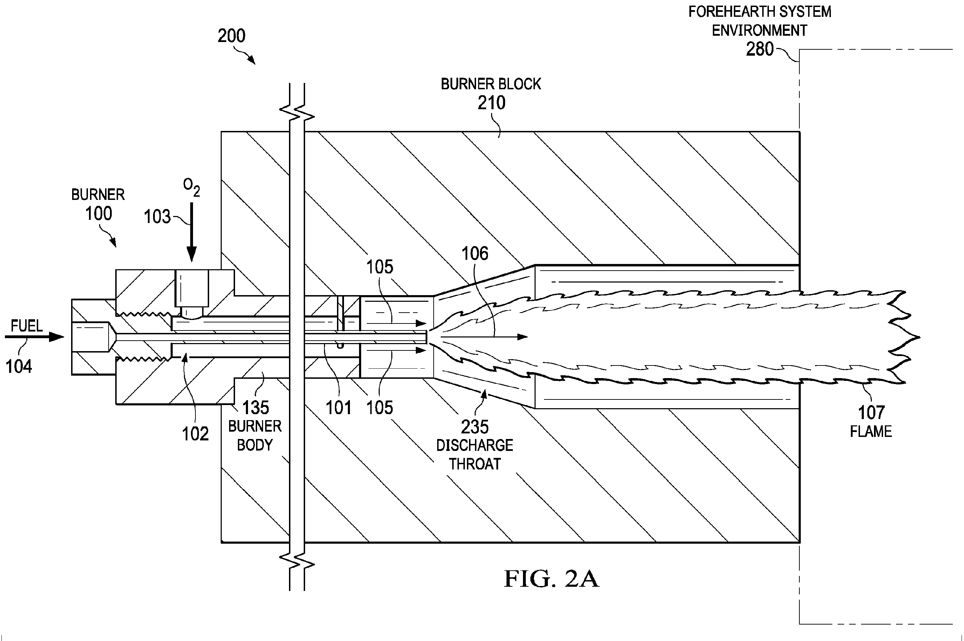

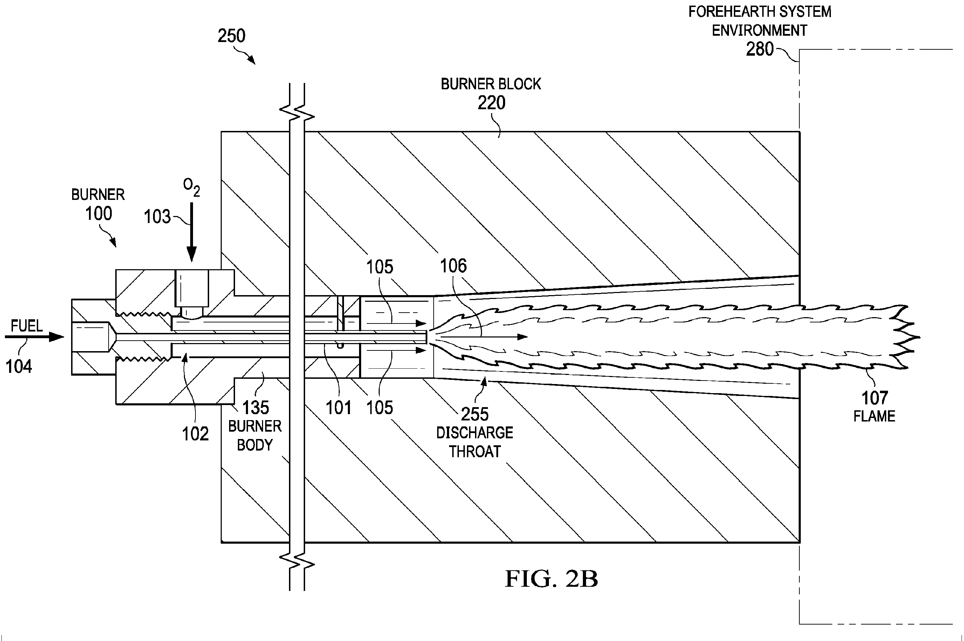

FIG. 1 shows a cross-sectional view of an example oxygen fuel forehearth burner shown as 100 for the forehearth system section of a glass manufacturing system. The oxygen fuel forehearth burner 100 comprises a burner body 135 that typically comprises stainless steel. The oxygen fuel forehearth burner 100 is generally installed in a burner block comprising a refractory material, such as the burner block being positioned around the oxygen fuel forehearth burner 100. Example burner blocks are shown in FIGs. 2A and 2B described below. The oxygen fuel forehearth burner 100 generally also includes at least one flow controller for controlling the flow of the fuel and the flow of the oxygen.

The arrangement shown for the oxygen fuel forehearth burner 100 is a coaxial pipe arrangement comprising an inner disposed fuel pipe 101 and an outer disposed oxygen pipe 102, where the fuel pipe 101 is contained inside the oxygen pipe 102. This arrangement delays the combustion process (reflected in the flame 107) for the oxygen fuel forehearth burner 100 so that combustion first occurs beyond the burner body 135 to be generally in the discharge throat of the burner block (see the burner blocks including a discharge throat shown in FIGs. 2A and 2B described below).

The oxygen, or oxygen-containing gas, enters its oxygen pipe 102 through an inlet path 103 formed through the burner body 135 shown optionally oriented at a right angle to the length direction of the oxygen fuel forehearth burner 100 and the oxygen pipe 102. The fuel enters the fuel pipe 101 axially (length direction) through a fuel inlet 104 also formed in the burner body 135. The fuel generally comprises natural gas known to be primarily methane, or propane, and the oxygen source generally comprises O₂.

The fuel pipe 101 can be seen to extend in the length direction 109 beyond the burner body 135 and beyond the oxygen pipe 102, generally a distance anywhere between 0.25" (inches) to 6" beyond the oxygen pipe 102. The flame 107 resulting from the combustion of the fuel with the oxygen generally has a low velocity laminar layer of O₂ 105 shown surrounding flame 107. It may be possible for the discharge throat to be replaced by a direct discharge into the atmosphere. The laminar flow of fuel output by the fuel pipe 101 shown as 106 which is introduced near or at the center of the flame 107 emerging from the fuel outlet 101a, is generally moving at a velocity of 75 to 300 ft/s.

Disclosed aspects recognize there are two factors which should be accounted for in a design of an oxygen fuel forehearth burner for a forehearth system for a glass manufacturing system. The function of the forehearth system comprising at least one oxygen fuel forehearth burner in a glass manufacturing system is to maintain the temperature of the molting glass, or to slightly cool the molten glass received from the glass melting furnace. It is recognized herein that the heat input needed for the forehearth system is significantly less as compared to the heat input needed for the glass melting furnace. This results in a lower volume of fuel and oxygen gas being passed through the oxygen fuel forehearth burner(s).

This lower volume flow rate of reactant gas presents a challenge for oxygen fuel forehearth burners which are designed to be cooled almost entirely by the flow of reactants, the reactants being O₂ or an oxygen-containing gas mixture, and a fuel. As the flow rate of unburnt gases goes down, so does the total amount of heat that can be carried away from the oxygen fuel forehearth burner. This challenge is met by disclosed oxygen fuel forehearth burners as described below.

It is also recognized that the current state of the art for oxygen fuel burner for a forehearth system of a glass manufacturing system does not adequately address the unique challenges of the oxygen fuel burner in the forehearth environment, and this results in oxygen fuel forehearth burners which can overheat and thus prematurely fail. By applying disclosed aspects, an oxygen fuel forehearth burner 100 can be expected to remain within the operational limits of the materials of construction including the material of the burner body 135 which as noted above generally comprises stainless steel, at essentially every reasonable operating condition, and also operate normally for the life of the glass manufacturing system.

The current state of the art for forehearth systems is recognized to also not adequately address the varied shapes of burner blocks that customers may use. It is common for customers to design their own forehearth burner blocks. When these customer-designed burner blocks are combined with a current state of the art oxygen fuel forehearth burner, it can cause unintended consequences. A poorly matched oxygen fuel forehearth burner and burner block can cause the oxygen fuel forehearth burner to prematurely fail due to excessively high temperatures in the burner block created by poor flow dynamics. Disclosed forehearths burners are generally essentially invariant to the particular shape of the burner block, generally ensuring cooler operation no matter the specific installation of the oxygen fuel forehearth burner.

As described above, the forehearth system comprising at least one oxygen fuel forehearth burner transports the molten glass received from the glass melting furnace to the glass forming apparatus. Therefore, the forehearth system is recognized to be the last opportunity to affect the quality and the temperature of the glass. Temperature uniformity in the molten glass is recognized to be important for the forehearth system. The oxygen fuel forehearth burner can have a significant effect on both temperature control and temperature uniformity. If the oxygen fuel forehearth burner is designed for maximum flame luminosity, more of the heat produced by the combustion is absorbed by the top of the molten glass through thermal radiation. The top portion of the molten glass is thus recognized to need more heat input as compared to the bottom of the molten glass, which is in contact with the burner block. This creates a more uniform temperature for the molten glass being received by the glass forming apparatus.

Beyond temperature uniformity of the molten glass, another major benefit of a luminous flame (a burning flame which is brightly visible) provided by a disclosed oxygen fuel forehearth burner is the generation of more useful heat generated per unit of fuel consumed. If one compares an oxygen fuel forehearth burner with a yellow luminous flame and an oxygen fuel forehearth burner with a blue flame, the oxygen fuel forehearth burner with the yellow luminous flame (relatively lower temperature) can be operated at a lower flow rate of both O₂ and fuel, and still heat the same volume of molten glass.

To ensure the oxygen fuel forehearth burner does not overheat in the forehearth environment which can cause catastrophic damage to the oxygen fuel forehearth burner and also potentially to the glass batch moving through the furnace, it is recognized that the oxygen and the fuel should not be mixed in the oxygen fuel forehearth burner. This is because it is recognized there is generally not enough volume flow to eliminate the heat generated when using a metallic pipe as a combustion chamber for the oxygen fuel forehearth burner. Known oxygen fuel forehearth burners are recognized to not allow for the creation of a flame with maximum luminosity. In order to provide a maximum flame luminosity for an oxygen fuel forehearth burner, it is recognized herein that the flame should be configured to be relatively long and the fuel should be introduced to the oxygen at a relatively low velocity.

In order to ensure the material of the burner body 135, which as noted above typically comprises stainless steel, stays within its safe operating temperature, the introduction of O₂ to the fuel as disclosed herein is delayed by the fuel pipe 101 extending beyond the burner body 135 into the discharge throat of the burner block. The point of fuel ignition is thus not the same as the point of O₂ injection. O₂ is instead injected into the oxygen fuel forehearth burner at the back of the oxygen fuel forehearth burner, while the fuel is not introduced until after the oxygen fuel forehearth burner (into the discharge throat), where the point of the fuel ignition should also be a sufficient distance from the burner body 135 of the oxygen fuel forehearth burner, this will also serve to keep the oxygen fuel forehearth burner cooler. To create a luminous flame during oxygen fuel combustion it is recognized herein that the fuel velocity should be controlled to be within a defined velocity range, such as 75 to 300 ft/s.

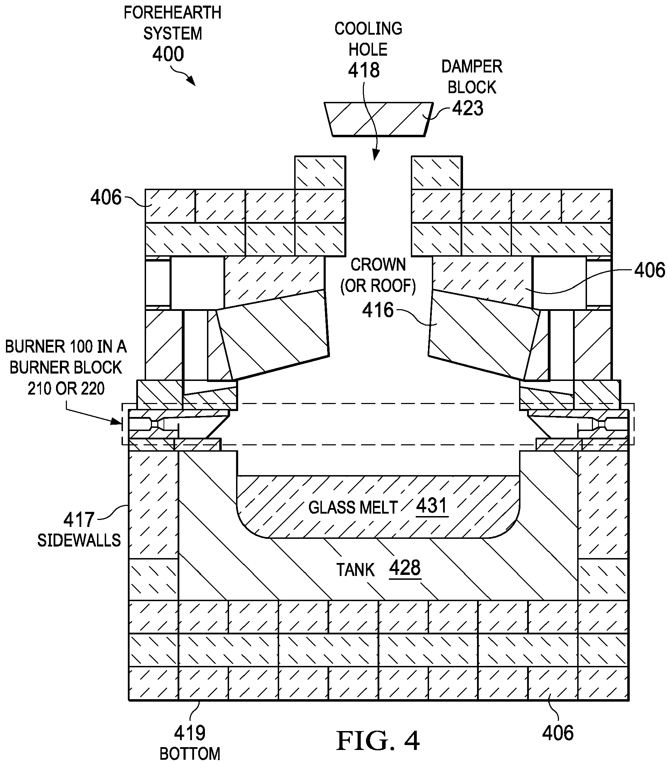

FIGs. 2A and 2B each show a cross-sectional view of an arrangement shown as 200 and 250, respectively, showing a disclosed oxygen fuel forehearth burner shown as 100 positioned in a typical burner block for a forehearth system, with the burner blocks shown as 210 and 220, respectively. The burner blocks 210, 220 each are comprised of a refractory material (such as a ceramic or a refractory metal or refractory metal alloy), and for simplicity are shown having has a single oxygen fuel forehearth burner 100 positioned on the input side of the burner block. The burner blocks include discharge throat shown as 235 210 shown in FIG. 2A and a discharge throat 255 for the burner block 220 shown in FIG. 2B. The distal end of the discharge throats 235 and 235 are coupled to a forehearth system environment shown as 280. Molten glass will generally be below the burners blocks 210 and 220, such as shown in FIG. 4 described below.

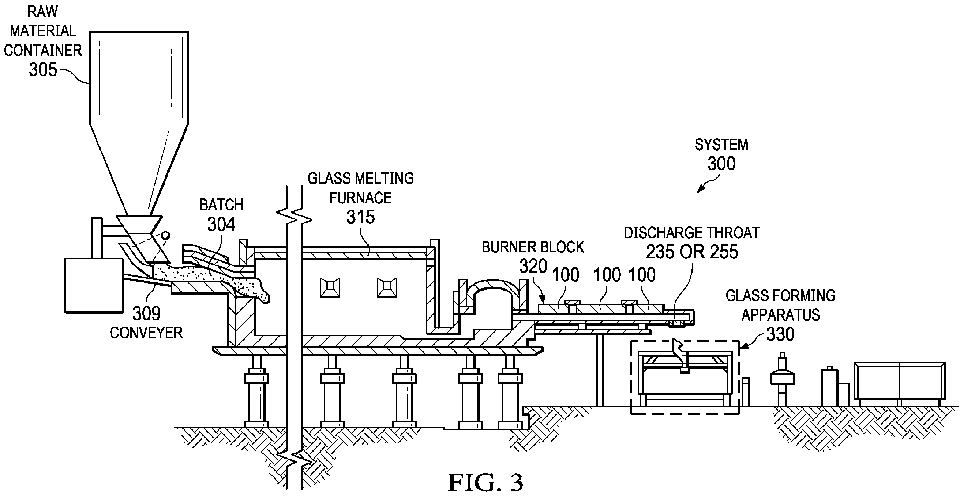

FIG. 3 depicts an example glass manufacturing system 300 according to an example aspect. The glass manufacturing system 300 includes a raw material container 310 that provides unprocessed glass to a glass melting furnace 315, and there are a plurality of disclosed oxygen fuel forehearth burners 100 positioned in a burner block 320 that receives the melted glass output from the glass melting furnace 315, where the burner block 320 includes a discharge throat 235 or 255. The discharge throat 235 or 255 is coupled to a glass forming apparatus 330.

### EXAMPLES

Disclosed aspects are further illustrated by the following specific Examples, which should not be construed as limiting the scope or content of this Disclosure in any way.

A prototype oxygen fuel forehearth burner for a forehearth system resembling oxygen fuel forehearth burner 100 described above was built with the above-described features that was installed in a burner block 210 or 220 of the working forehearth system 400 depicted in FIG. 4. The forehearth system 400 is shown including a superstructure comprising a plurality of refractory bricks 406, a burner block 210 or 220 within the superstructure above a molten glass tank 428 having molten glass therein shown as glass melt 431, and at least one oxygen fuel forehearth burner 100 positioned in the burner block 210 or 220. The refractory bricks 406 of the superstructure are configured to provide a crown (or roof) for 416, bottom 419, and sidewalls 417, where the bottom 419 and sidewalls 417 that define the molten glass tank 428, as well as for defining a cooling hole 418. There is a damper block 423 over the cooling hole 418.

The customer replaced an entire zone of the forehearth system 400 with disclosed oxygen fuel forehearth burners resembling the design of the oxygen fuel forehearth burner 100 shown in FIG. 1 and using temperature sensors and flow sensors obtained various data points related to the oxygen fuel forehearth burners and glass melt. The customer also had oxygen fuel forehearth burners in the same forehearth system which follow the current state of the art. The current state of the art oxygen fuel forehearth burner introduces the O₂ and the fuel together inside the burner body and the flame is thus produced at the point in the burner body which the oxygen meets the fuel (which generally comprises natural gas). The internal structures of the current state of the art oxygen fuel forehearth burner introduces the oxygen and fuel together at relatively high velocities which is recognized herein to not be conducive to a luminous flame.

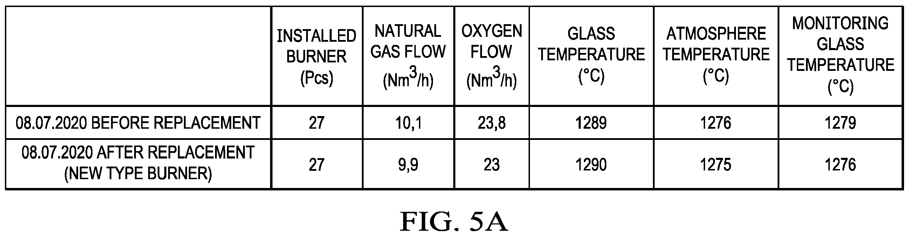

The customer compared the performance of oxygen fuel forehearth burner 100 (labelled "new type burner" in FIG. 5A) against the performance of current state of the art oxygen fuel forehearth burner (labelled "before replacement" in FIG. 5A), where the fuel was natural gas, and where FIG. 5A is a table summarizing these comparative oxygen fuel forehearth burner operating results. From this data, it is evidenced that for a disclosed oxygen fuel forehearth burner 100 the natural gas flow is about 2% lower when compared to the current state of the art oxygen fuel forehearth burner to maintain the same glass temperature. The other performance factor which was demonstrated by this test included a disclosed oxygen fuel forehearth burner's ability to stay within the burner body material's (as noted above typically being stainless steel) safe operational temperature limits.

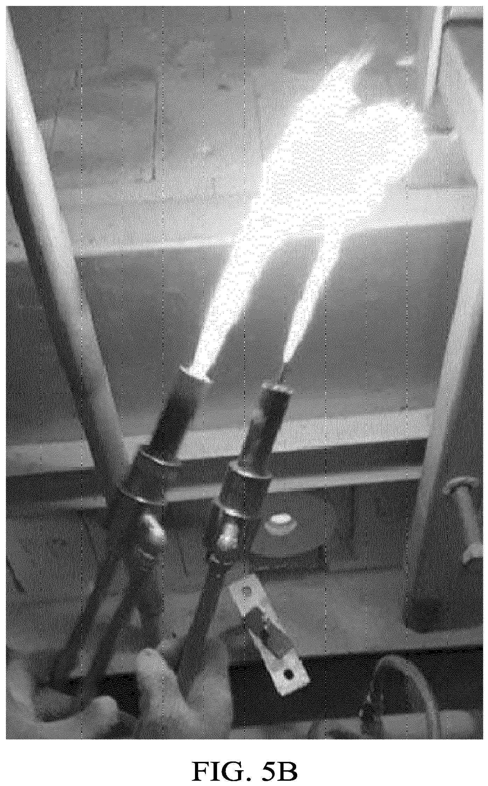

The customer noted this with their evaluation comments which can be seen in the scanned images shown in FIG. 5B. The glow from a disclosed oxygen fuel forehearth burner 100 is shown on the right where the flame can be seen beginning beyond the burner body, and the glow from a current state of the art oxygen fuel forehearth burner is shown on the left. On the left there was seen an orange glow for the flame shown emerging from the burner body of the oxygen fuel forehearth burner that indicated that the operational limits of the stainless steel of the burner body may have been surpassed. This current state of the art oxygen fuel forehearth burner will likely prematurely fail due to a reduced corrosion resistance and the physical weakening of the stainless steel of the burner body resulting from the excess temperature.

While various disclosed embodiments have been described above, it should be understood that they have been presented by way of example only, and not limitation. Numerous changes to the subject matter disclosed herein can be made in accordance with this Disclosure without departing from the spirit or scope of this Disclosure. In addition, while a particular feature may have been disclosed with respect to only one of several implementations, such feature may be combined with one or more other features of the other implementations as may be desired and advantageous for any given or particular application.

## Claims

1. A forehearth system (200), comprising:
a superstructure comprising a plurality of refractory bricks that frame a molten glass tank;
a burner block (210) comprising a refractory material within the superstructure above the molten glass tank including a discharge throat (235) that extends to a distal end of the burner block;
at least one oxygen fuel forehearth burner (100) within the burner block having a long axis along a length direction, the oxygen fuel forehearth burner comprising:
a burner body (135);
a fuel pipe (101) within the burner body having a fuel inlet (104) for receiving fuel and a fuel outlet, and
an oxygen pipe (102) within the burner body having an oxygen inlet for receiving oxygen and an oxygen outlet, wherein the oxygen pipe is positioned coaxially outside the fuel pipe;
wherein the fuel outlet extends beyond the oxygen pipe and beyond the burner body so that the oxygen first reaching the fuel and thus a flame (107) when operating is delayed.

2. The forehearth system (200) of claim 1, wherein the oxygen enters the oxygen pipe (102) through the burner body (135) at a right angle to the long axis.

3. The forehearth system (200) of claim 1, wherein the flame (107) extends out beyond the discharge throat (235).

4. A glass manufacturing system (300), comprising:
a glass melting furnace (315),
a forehearth system (200) comprising a superstructure including a plurality of refractory bricks that frame a molten glass tank;
a burner block (320) comprising a refractory material within the superstructure above the molten glass tank including a discharge throat (235, 255) that extends to a distal end of the burner block;
at least one oxygen fuel forehearth burner (100) within the burner block having a long axis along a length direction, the oxygen fuel forehearth burner comprising:
a burner body (135);
a fuel pipe (101) within the burner body having a fuel inlet (104) for receiving fuel and a fuel outlet, and
an oxygen pipe (102) within the burner body having an oxygen inlet for receiving oxygen and an oxygen outlet, wherein the oxygen pipe is positioned coaxially outside the fuel pipe;
wherein the fuel pipe extends beyond the oxygen pipe and beyond the burner body so that the oxygen first reaching the fuel and thus a flame (107) when operating is delayed, and
a glass forming apparatus coupled to receive molten glass after thermal processing performed by the oxygen fuel forehearth burner.

5. The glass manufacturing system (330) of claim 4, wherein the fuel enters the fuel pipe (101) along the length direction.

6. The glass manufacturing system (330) of claim 4, wherein the flame (107) extends out beyond the discharge throat (235, 255).

7. A method of operating at least one oxygen fuel forehearth burner (100) in a forehearth system (200) comprising a superstructure including a plurality of refractory bricks that frame a molten glass tank and a burner block (210) comprising a refractory material within the superstructure above the molten glass tank including a discharge throat (235) that extends to a distal end of the burner block, the method comprising:
providing the oxygen fuel forehearth burner comprising a burner body with an oxygen pipe (102) within the burner body having an oxygen inlet for receiving oxygen and an oxygen outlet, wherein the oxygen pipe is positioned coaxially outside a fuel pipe (101) having a fuel outlet, wherein the fuel outlet extends beyond the oxygen pipe and beyond the burner body;
the oxygen first reaching the fuel so that a flame (107) when operating is delayed until the discharge throat.

8. The method of claim 7, wherein the fuel outlet is at a distance between 0.25 inches and 6 inches in the length direction beyond the oxygen pipe (102).

9. The method of claim 7, wherein a velocity at the fuel outlet is between 75 to 300 ft/s.

10. The method of claim 7, wherein the flame (107) extends out beyond the discharge throat (235).
